# EUROPEAN PATENT SPECIFICATION

(11) **EP 3 355 644 B1**
(45) Date of publication and mention of the grant of the patent: **03.06.2020**
(21) Application number: 16848880.7
(22) Date of filing: 20.09.2016
(51) Int. Cl.: H04W 72/12, H04W 28/12, H04W 76/10

(54) **METHODS AND DEVICES BY WHICH PRIORITIZED SERVICE IS TRANSMITTED**
VERFAHREN UND VORRICHTUNGEN ZUR ÜBERTRAGUNG EINES PRIORISIERTEN DIENSTES
PROCÉDÉS ET DISPOSITIFS AU MOYEN DUQUEL UN SERVICE D'ORDRE PRIORITAIRE EST TRANSMIS

(30) Priority: 24.09.2015 US 201562232365 P; 25.09.2015 US 201562232463 P
(43) Date of publication of application: 01.08.2018
(73) Proprietor: LG Electronics Inc., Yeongdeungpo-gu Seoul 07336 (KR)
(72) Inventor: KIM, Sangwon, Seoul 06772 (KR); LEE, Youngdae, Seoul 06772 (KR)
(74) Representative: Plasseraud IP
(86) International application number: PCT/KR2016/010465
(87) International publication number: WO 2017/052154

(56) References cited:
- WO-A1-2014/084596
- WO-A1-2015/041505
- WO-A1-2015/065003
- WO-A1-2015/066383
- WO-A2-2014/042482
- KR-A- 20130 074 029
- US-A1- 2013 259 000
- US-A1- 2015 237 641
- NOKIA NETWORKS ET AL: "Establishment Cause for VoLTE calls", 3GPP DRAFT; R2-153213 VOLTE ESTABLISHMENT CAUSE V8, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Beijing, China; 20150824 - 20150828 23 August 2015 (2015-08-23), XP051003983, Retrieved from the Internet: URL:http://www.3gpp.org/ftp/Meetings_3GPP_ SYNC/RAN2/Docs/ [retrieved on 2015-08-23]
- NOKIA NETWORKS ET AL: "Addition of establishment cause for mobile-originating VoLTE calls", 3GPP DRAFT; 36331_CR1858_(REL-12)_R2-153219 NEW VOLTE ESTABLISHMENT CAUSE VOICE (MOANDMT), 3RD GENERATION PARTNERSHIP PROJECT (3GPP), MOBILE COMPETENCE CENTRE ; 650, ROUTE DES LUCIOLES ; F-06921 SOPHI , vol. RAN WG2, no. Beijing, China; 20150824 - 20150828 23 August 2015 (2015-08-23), XP051003810, Retrieved from the Internet: URL:http://www.3gpp.org/ftp/Meetings_3GPP_ SYNC/RAN2/Docs/ [retrieved on 2015-08-23]

## Description

### BACKGROUND OF THE INVENTION

### Field of the invention

The present invention relates to a wireless communication system, and more particularly, to a method of transmitting a service which needs to be prioritized in a wireless communication system, and an apparatus supporting the method.

### Related Art

3GPP (3rd Generation Partnership Project) LTE (Long Term Evolution) that is an advancement of UMTS (Universal Mobile Telecommunication System) is being introduced with 3GPP release 8. In 3GPP LTE, OFDMA (orthogonal frequency division multiple access) is used for downlink, and SC-FDMA (single carrier-frequency division multiple access) is used for uplink. The 3GPP LTE adopts MIMO (multiple input multiple output) having maximum four antennas. Recently, a discussion of 3GPP LTE-A (LTE-Advanced) which is the evolution of the 3GPP LTE is in progress.

In order to solve a problem of an overload caused by access of a plurality of user equipments (UEs), a mobile communication system may perform an access barring procedure of new UEs. For example, the mobile communication system may transmit an overload start message to a specific base station, thereby barring a radio access control (RRC) access. The following five methods are proposed for UE access barring in 3GPP.
(1) RRC access barring for data transmission of all UEs other than an emergency UE
(2) RRC access barring of all UEs for signaling
(3) Allowing only RRC access for data transmission of an emergency UE and network
(4) Allowing only RRC access for data transmission of a high-prioritized UE and network
(5) RRC access barring of a UE for which delay access is allowed (delay tolerant traffic)
International application publication No. WO 2015/066383 A1 discusses systems and methods for handling priority services congestion.

### SUMMARY OF THE INVENTION

An operator providing a communication service may desire to prioritize a specific service over other services. For example, the operator may desire to prioritize a voice over LTE (VoLTE) call over other mobile originated (MO) data calls. Alternatively, the operator may desire to allow the VoLTE call always with a higher priority than other calls. However, when a type of a service which needs to be prioritized is included in a radio resource control (RRC) connection request message, it may be difficult to extend the type of the service which needs to be prioritized in the future due to a capacity limitation of the RRC connection request message. Therefore, there is a need to newly propose a method of providing a service which an operator desires to prioritize.

According to an aspect, there is provided a method performed by a user equipment (UE) in a wireless communication system as set forth in the appended claims.

According to another aspect, there is provided a method performed by a base station (BS) in a wireless communication system as set forth in the appended claims.

According to yet another aspect, there is provided a UE in a wireless communication system as set forth in the appended claims. According to yet another aspect, there is provided a BS in a wireless communication system as set forth in the appended claims.

### BRIEF DESCRIPTION OF THE DRAWINGS

FIG. 1 shows LTE system architecture.
FIG. 2 shows a control plane of a radio interface protocol of an LTE system.
FIG. 3 shows a user plane of a radio interface protocol of an LTE system.
FIG. 4 shows an RRC connection establishment procedure.
FIG. 5 shows a method of barring access of a user equipment (UE) by a base station (BS).
FIG. 6 shows a method of providing a prioritized service according to an embodiment of the present invention.
FIG. 7 shows a method of determining whether a BS will receive a prioritized service according to an embodiment of the present invention.
FIG. 8 shows an example of a method of providing a prioritized service according to an embodiment of the present invention.
FIG. 9 shows an example of a method of providing a prioritized service according to an embodiment of the present invention.
FIG. 10 is a block diagram showing a method of transmitting a prioritized service by a UE according to an embodiment of the present invention.
FIG. 11 is a block diagram showing a method of receiving a prioritized service by a BS according to an embodiment of the present invention.
FIG. 12 is a block diagram illustrating a wireless communication system according to the embodiment of the present invention.

### DESCRIPTION OF EXEMPLARY EMBODIMENTS

The technology described below can be used in various wireless communication systems such as code division multiple access (CDMA), frequency division multiple access (FDMA), time division multiple access (TDMA), orthogonal frequency division multiple access (OFDMA), single carrier frequency division multiple access (SC-FDMA), etc. The CDMA can be implemented with a radio technology such as universal terrestrial radio access (UTRA) or CDMA-2000. The TDMA can be implemented with a radio technology such as global system for mobile communications (GSM)/general packet ratio service (GPRS)/enhanced data rate for GSM evolution (EDGE). The OFDMA can be implemented with a radio technology such as institute of electrical and electronics engineers (IEEE) 802.11 (Wi-Fi), IEEE 802.16 (WiMAX), IEEE 802.20, evolved UTRA (E-UTRA), etc. IEEE 802.16m is evolved from IEEE 802.16e, and provides backward compatibility with a system based on the IEEE 802.16e. The UTRA is a part of a universal mobile telecommunication system (UMTS). 3rd generation partnership project (3GPP) long term evolution (LTE) is a part of an evolved UMTS (E-UMTS) using the E-UTRA. The 3GPP LTE uses the OFDMA in a downlink and uses the SC-FDMA in an uplink. LTE-advanced (LTE-A) is an evolution of the LTE.

For clarity, the following description will focus on LTE-A. However, technical features of the present invention are not limited thereto.

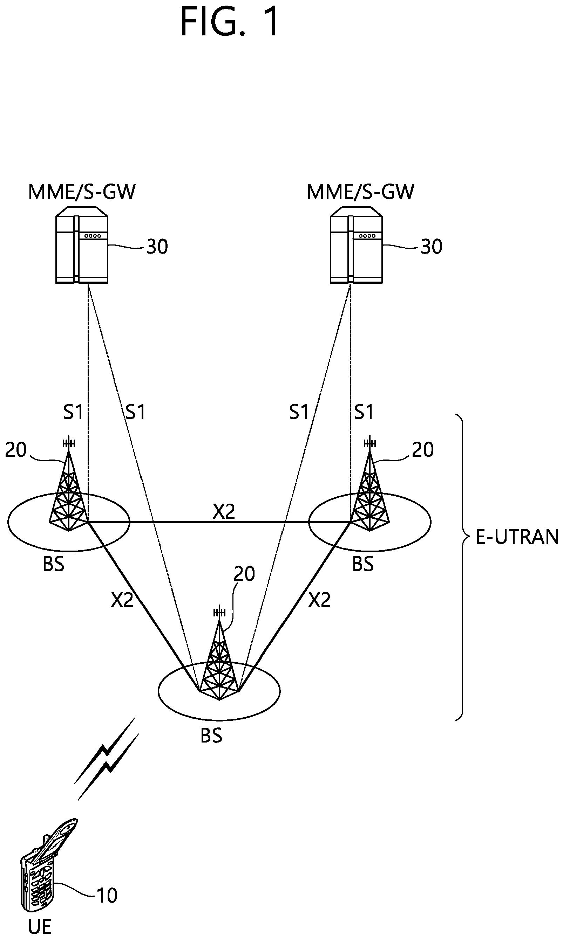

FIG. 1 shows LTE system architecture. The communication network is widely deployed to provide a variety of communication services such as voice over internet protocol (VoIP) through IMS and packet data.

Referring to FIG. 1, the LTE system architecture includes one or more user equipment (UE; 10), an evolved-UMTS terrestrial radio access network (E-UTRAN) and an evolved packet core (EPC). The UE 10 refers to a communication equipment carried by a user. The UE 10 may be fixed or mobile, and may be referred to as another terminology, such as a mobile station (MS), a user terminal (UT), a subscriber station (SS), a wireless device, etc.

The E-UTRAN includes one or more evolved node-B (eNB) 20, and a plurality of UEs may be located in one cell. The eNB 20 provides an end point of a control plane and a user plane to the UE 10. The eNB 20 is generally a fixed station that communicates with the UE 10 and may be referred to as another terminology, such as a base station (BS), a base transceiver system (BTS), an access point, etc. One eNB 20 may be deployed per cell. There are one or more cells within the coverage of the eNB 20. A single cell is configured to have one of bandwidths selected from 1.25, 2.5, 5, 10, and 20 MHz, etc., and provides downlink or uplink transmission services to several UEs. In this case, different cells can be configured to provide different bandwidths.

Hereinafter, a downlink (DL) denotes communication from the eNB 20 to the UE 10, and an uplink (UL) denotes communication from the UE 10 to the eNB 20. In the DL, a transmitter may be a part of the eNB 20, and a receiver may be a part of the UE 10. In the UL, the transmitter may be a part of the UE 10, and the receiver may be a part of the eNB 20.

The EPC includes a mobility management entity (MME) which is in charge of control plane functions, and a system architecture evolution (SAE) gateway (S-GW) which is in charge of user plane functions. The MME/S-GW 30 may be positioned at the end of the network and connected to an external network. The MME has UE access information or UE capability information, and such information may be primarily used in UE mobility management. The S-GW is a gateway of which an endpoint is an E-UTRAN. The MME/S-GW 30 provides an end point of a session and mobility management function for the UE 10. The EPC may further include a packet data network (PDN) gateway (PDN-GW). The PDN-GW is a gateway of which an endpoint is a PDN.

The MME provides various functions including non-access stratum (NAS) signaling to eNBs 20, NAS signaling security, access stratum (AS) security control, Inter core network (CN) node signaling for mobility between 3GPP access networks, idle mode UE reachability (including control and execution of paging retransmission), tracking area list management (for UE in idle and active mode), P-GW and S-GW selection, MME selection for handovers with MME change, serving GPRS support node (SGSN) selection for handovers to 2G or 3G 3GPP access networks, roaming, authentication, bearer management functions including dedicated bearer establishment, support for public warning system (PWS) (which includes earthquake and tsunami warning system (ETWS) and commercial mobile alert system (CMAS)) message transmission. The S-GW host provides assorted functions including per-user based packet filtering (by e.g., deep packet inspection), lawful interception, UE Internet protocol (IP) address allocation, transport level packet marking in the DL, UL and DL service level charging, gating and rate enforcement, DL rate enforcement based on APN-AMBR. For clarity MME/S-GW 30 will be referred to herein simply as a "gateway," but it is understood that this entity includes both the MME and S-GW.

Interfaces for transmitting user traffic or control traffic may be used. The UE 10 and the eNB 20 are connected by means of a Uu interface. The eNBs 20 are interconnected by means of an X2 interface. Neighboring eNBs may have a meshed network structure that has the X2 interface. The eNBs 20 are connected to the EPC by means of an S1 interface. The eNBs 20 are connected to the MME by means of an S1-MME interface, and are connected to the S-GW by means of S1-U interface. The S1 interface supports a many-to-many relation between the eNB 20 and the MME/S-GW.

The eNB 20 may perform functions of selection for gateway 30, routing toward the gateway 30 during a radio resource control (RRC) activation, scheduling and transmitting of paging messages, scheduling and transmitting of broadcast channel (BCH) information, dynamic allocation of resources to the UEs 10 in both UL and DL, configuration and provisioning of eNB measurements, radio bearer control, radio admission control (RAC), and connection mobility control in LTE_ACTIVE state. In the EPC, and as noted above, gateway 30 may perform functions of paging origination, LTE_IDLE state management, ciphering of the user plane, SAE bearer control, and ciphering and integrity protection of NAS signaling.

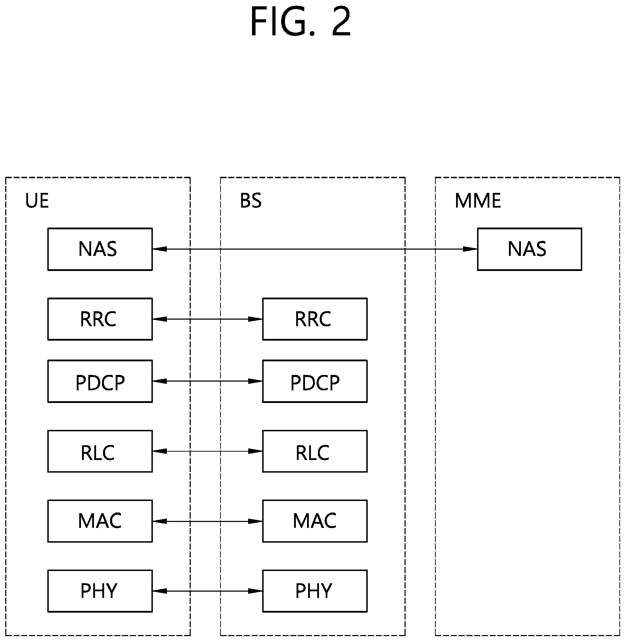

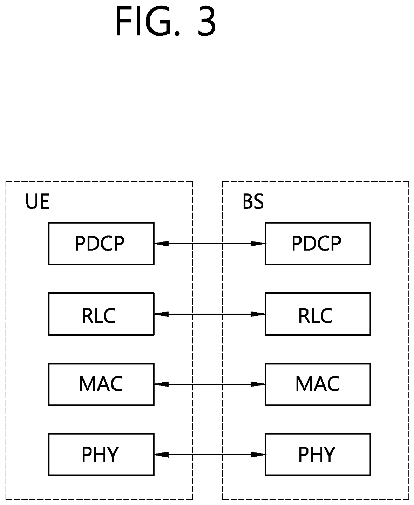

FIG. 2 shows a control plane of a radio interface protocol of an LTE system. FIG. 3 shows a user plane of a radio interface protocol of an LTE system.

Layers of a radio interface protocol between the UE and the E-UTRAN may be classified into a first layer (LI), a second layer (L2), and a third layer (L3) based on the lower three layers of the open system interconnection (OSI) model that is well-known in the communication system. The radio interface protocol between the UE and the E-UTRAN may be horizontally divided into a physical layer, a data link layer, and a network layer, and may be vertically divided into a control plane (C-plane) which is a protocol stack for control signal transmission and a user plane (U-plane) which is a protocol stack for data information transmission. The layers of the radio interface protocol exist in pairs at the UE and the E-UTRAN, and are in charge of data transmission of the Uu interface.

A physical (PHY) layer belongs to the L1. The PHY layer provides a higher layer with an information transfer service through a physical channel. The PHY layer is connected to a medium access control (MAC) layer, which is a higher layer of the PHY layer, through a transport channel. A physical channel is mapped to the transport channel. Data is transferred between the MAC layer and the PHY layer through the transport channel. Between different PHY layers, i.e., a PHY layer of a transmitter and a PHY layer of a receiver, data is transferred through the physical channel using radio resources. The physical channel is modulated using an orthogonal frequency division multiplexing (OFDM) scheme, and utilizes time and frequency as a radio resource.

The PHY layer uses several physical control channels. A physical downlink control channel (PDCCH) reports to a UE about resource allocation of a paging channel (PCH) and a downlink shared channel (DL-SCH), and hybrid automatic repeat request (HARQ) information related to the DL-SCH. The PDCCH may carry a UL grant for reporting to the UE about resource allocation of UL transmission. A physical control format indicator channel (PCFICH) reports the number of OFDM symbols used for PDCCHs to the UE, and is transmitted in every subframe. A physical hybrid ARQ indicator channel (PHICH) carries an HARQ acknowledgement (ACK)/non-acknowledgement (NACK) signal in response to UL transmission. A physical uplink control channel (PUCCH) carries UL control information such as HARQ ACK/NACK for DL transmission, scheduling request, and CQI. A physical uplink shared channel (PUSCH) carries a UL-uplink shared channel (SCH).

A physical channel consists of a plurality of subframes in time domain and a plurality of subcarriers in frequency domain. One subframe consists of a plurality of symbols in the time domain. One subframe consists of a plurality of resource blocks (RBs). One RB consists of a plurality of symbols and a plurality of subcarriers. In addition, each subframe may use specific subcarriers of specific symbols of a corresponding subframe for a PDCCH. For example, a first symbol of the subframe may be used for the PDCCH. The PDCCH carries dynamic allocated resources, such as a physical resource block (PRB) and modulation and coding scheme (MCS). A transmission time interval (TTI) which is a unit time for data transmission may be equal to a length of one subframe. The length of one subframe may be 1 ms.

The transport channel is classified into a common transport channel and a dedicated transport channel according to whether the channel is shared or not. A DL transport channel for transmitting data from the network to the UE includes a broadcast channel (BCH) for transmitting system information, a paging channel (PCH) for transmitting a paging message, a DL-SCH for transmitting user traffic or control signals, etc. The DL-SCH supports HARQ, dynamic link adaptation by varying the modulation, coding and transmit power, and both dynamic and semi-static resource allocation. The DL-SCH also may enable broadcast in the entire cell and the use of beamforming. The system information carries one or more system information blocks. All system information blocks may be transmitted with the same periodicity. Traffic or control signals of a multimedia broadcast/multicast service (MBMS) may be transmitted through the DL-SCH or a multicast channel (MCH).

A UL transport channel for transmitting data from the UE to the network includes a random access channel (RACH) for transmitting an initial control message, a UL-SCH for transmitting user traffic or control signals, etc. The UL-SCH supports HARQ and dynamic link adaptation by varying the transmit power and potentially modulation and coding. The UL-SCH also may enable the use of beamforming. The RACH is normally used for initial access to a cell.

A MAC layer belongs to the L2. The MAC layer provides services to a radio link control (RLC) layer, which is a higher layer of the MAC layer, via a logical channel. The MAC layer provides a function of mapping multiple logical channels to multiple transport channels. The MAC layer also provides a function of logical channel multiplexing by mapping multiple logical channels to a single transport channel. A MAC sublayer provides data transfer services on logical channels.

The logical channels are classified into control channels for transferring control plane information and traffic channels for transferring user plane information, according to a type of transmitted information. That is, a set of logical channel types is defined for different data transfer services offered by the MAC layer. The logical channels are located above the transport channel, and are mapped to the transport channels.

The control channels are used for transfer of control plane information only. The control channels provided by the MAC layer include a broadcast control channel (BCCH), a paging control channel (PCCH), a common control channel (CCCH), a multicast control channel (MCCH) and a dedicated control channel (DCCH). The BCCH is a downlink channel for broadcasting system control information. The PCCH is a downlink channel that transfers paging information and is used when the network does not know the location cell of a UE. The CCCH is used by UEs having no RRC connection with the network. The MCCH is a point-to-multipoint downlink channel used for transmitting MBMS control information from the network to a UE. The DCCH is a point-to-point bi-directional channel used by UEs having an RRC connection that transmits dedicated control information between a UE and the network.

Traffic channels are used for the transfer of user plane information only. The traffic channels provided by the MAC layer include a dedicated traffic channel (DTCH) and a multicast traffic channel (MTCH). The DTCH is a point-to-point channel, dedicated to one UE for the transfer of user information and can exist in both uplink and downlink. The MTCH is a point-to-multipoint downlink channel for transmitting traffic data from the network to the UE.

Uplink connections between logical channels and transport channels include the DCCH that can be mapped to the UL-SCH, the DTCH that can be mapped to the UL-SCH and the CCCH that can be mapped to the UL-SCH. Downlink connections between logical channels and transport channels include the BCCH that can be mapped to the BCH or DL-SCH, the PCCH that can be mapped to the PCH, the DCCH that can be mapped to the DL-SCH, and the DTCH that can be mapped to the DL-SCH, the MCCH that can be mapped to the MCH, and the MTCH that can be mapped to the MCH.

An RLC layer belongs to the L2. The RLC layer provides a function of adjusting a size of data, so as to be suitable for a lower layer to transmit the data, by concatenating and segmenting the data received from an upper layer in a radio section. In addition, to ensure a variety of quality of service (QoS) required by a radio bearer (RB), the RLC layer provides three operation modes, i.e., a transparent mode (TM), an unacknowledged mode (UM), and an acknowledged mode (AM). The AM RLC provides a retransmission function through an automatic repeat request (ARQ) for reliable data transmission. Meanwhile, a function of the RLC layer may be implemented with a functional block inside the MAC layer. In this case, the RLC layer may not exist.

A packet data convergence protocol (PDCP) layer belongs to the L2. The PDCP layer provides a function of header compression function that reduces unnecessary control information such that data being transmitted by employing IP packets, such as IPv4 or IPv6, can be efficiently transmitted over a radio interface that has a relatively small bandwidth. The header compression increases transmission efficiency in the radio section by transmitting only necessary information in a header of the data. In addition, the PDCP layer provides a function of security. The function of security includes ciphering which prevents inspection of third parties, and integrity protection which prevents data manipulation of third parties.

A radio resource control (RRC) layer belongs to the L3. The RLC layer is located at the lowest portion of the L3, and is only defined in the control plane. The RRC layer takes a role of controlling a radio resource between the UE and the network. For this, the UE and the network exchange an RRC message through the RRC layer. The RRC layer controls logical channels, transport channels, and physical channels in relation to the configuration, reconfiguration, and release of RBs. An RB is a logical path provided by the L1 and L2 for data delivery between the UE and the network. That is, the RB signifies a service provided the L2 for data transmission between the UE and E-UTRAN. The configuration of the RB implies a process for specifying a radio protocol layer and channel properties to provide a particular service and for determining respective detailed parameters and operations. The RB is classified into two types, i.e., a signaling RB (SRB) and a data RB (DRB). The SRB is used as a path for transmitting an RRC message in the control plane. The DRB is used as a path for transmitting user data in the user plane.

A Non-Access Stratum (NAS) layer placed over the RRC layer performs functions, such as session management and mobility management.

Referring to FIG. 2, the RLC and MAC layers (terminated in the eNB on the network side) may perform functions such as scheduling, automatic repeat request (ARQ), and hybrid automatic repeat request (HARQ). The RRC layer (terminated in the eNB on the network side) may perform functions such as broadcasting, paging, RRC connection management, RB control, mobility functions, and UE measurement reporting and controlling. The NAS control protocol (terminated in the MME of gateway on the network side) may perform functions such as a SAE bearer management, authentication, LTE_IDLE mobility handling, paging origination in LTE_IDLE, and security control for the signaling between the gateway and UE.

Referring to FIG. 3, the RLC and MAC layers (terminated in the eNB on the network side) may perform the same functions for the control plane. The PDCP layer (terminated in the eNB on the network side) may perform the user plane functions such as header compression, integrity protection, and ciphering.

### Hereinafter, An RRC state of a UE and RRC connection procedure are described.

An RRC state indicates whether an RRC layer of the UE is logically connected to an RRC layer of the E-UTRAN. The RRC state may be divided into two different states such as an RRC connected state and an RRC idle state. When an RRC connection is established between the RRC layer of the UE and the RRC layer of the E-UTRAN, the UE is in RRC_CONNECTED, and otherwise the UE is in RRC_IDLE. Since the UE in RRC_CONNECTED has the RRC connection established with the E-UTRAN, the E-UTRAN may recognize the existence of the UE in RRC_CONNECTED and may effectively control the UE. Meanwhile, the UE in RRC_IDLE may not be recognized by the E-UTRAN, and a CN manages the UE in unit of a TA which is a larger area than a cell. That is, only the existence of the UE in RRC_IDLE is recognized in unit of a large area, and the UE must transition to RRC_CONNECTED to receive a typical mobile communication service such as voice or data communication.

In RRC_IDLE state, the UE may receive broadcasts of system information and paging information while the UE specifies a discontinuous reception (DRX) configured by NAS, and the UE has been allocated an identification (ID) which uniquely identifies the UE in a tracking area and may perform public land mobile network (PLMN) selection and cell reselection. Also, in RRC_IDLE state, no RRC context is stored in the eNB.

In RRC_CONNECTED state, the UE has an E-UTRAN RRC connection and a context in the E-UTRAN, such that transmitting and/or receiving data to/from the eNB becomes possible. Also, the UE can report channel quality information and feedback information to the eNB. In RRC_CONNECTED state, the E-UTRAN knows the cell to which the UE belongs. Therefore, the network can transmit and/or receive data to/from UE, the network can control mobility (handover and inter-radio access technologies (RAT) cell change order to GSM EDGE radio access network (GERAN) with network assisted cell change (NACC)) of the UE, and the network can perform cell measurements for a neighboring cell.

In RRC_IDLE state, the UE specifies the paging DRX cycle. Specifically, the UE monitors a paging signal at a specific paging occasion of every UE specific paging DRX cycle. The paging occasion is a time interval during which a paging signal is transmitted. The UE has its own paging occasion.

A paging message is transmitted over all cells belonging to the same tracking area. If the UE moves from one TA to another TA, the UE will send a tracking area update (TAU) message to the network to update its location.

When the user initially powers on the UE, the UE first searches for a proper cell and then remains in RRC_IDLE in the cell. When there is a need to establish an RRC connection, the UE which remains in RRC_IDLE establishes the RRC connection with the RRC of the E-UTRAN through an RRC connection procedure and then may transition to RRC_CONNECTED. The UE which remains in RRC_IDLE may need to establish the RRC connection with the E-UTRAN when uplink data transmission is necessary due to a user's call attempt or the like or when there is a need to transmit a response message upon receiving a paging message from the E-UTRAN.

To manage mobility of the UE in the NAS layer, two states are defined, i.e., an EPS mobility management-REGISTERED (EMM-REGISTERED) state and an EMM-DEREGISTERED state. These two states apply to the UE and the MME. Initially, the UE is in the EMM-DEREGISTERED state. To access a network, the UE performs a process of registering to the network through an initial attach procedure. If the attach procedure is successfully performed, the UE and the MME enter the EMM-REGISTERED state.

To manage a signaling connection between the UE and the EPC, two states are defined, i.e., an EPS connection management (ECM)-IDLE state and an ECM-CONNECTED state. These two states apply to the UE and the MME. When the UE in the ECM-IDLE state establishes an RRC connection with the E-UTRAN, the UE enters the ECM-CONNECTED state. When the MME in the ECM-IDLE state establishes an S1 connection with the E-UTRAN, the MME enters the ECM-CONNECTED state. When the UE is in the ECM-IDLE state, the E-UTRAN does not have context information of the UE. Therefore, the UE in the ECM-IDLE state performs a UE-based mobility related procedure such as cell selection or reselection without having to receive a command of the network. On the other hand, when the UE is in the ECM-CONNECTED state, mobility of the UE is managed by the command of the network. If a location of the UE in the ECM-IDLE state becomes different from a location known to the network, the UE reports the location of the UE to the network through a tracking area update procedure.

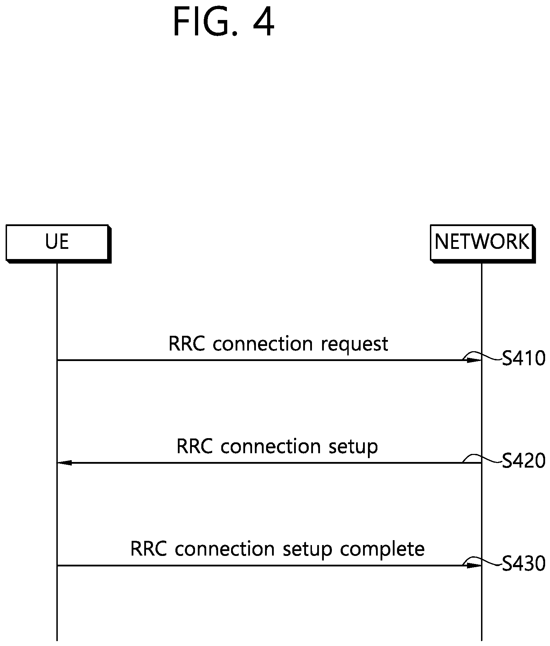

FIG. 4 shows an RRC connection establishment procedure.

The UE sends an RRC connection request message that requests RRC connection to a network (S410). The network sends an RRC connection establishment message as a response to the RRC connection request (S420). After receiving the RRC connection establishment message, the UE enters RRC connected mode.

The UE sends an RRC connection establishment complete message used to check the successful completion of the RRC connection to the network (S430).

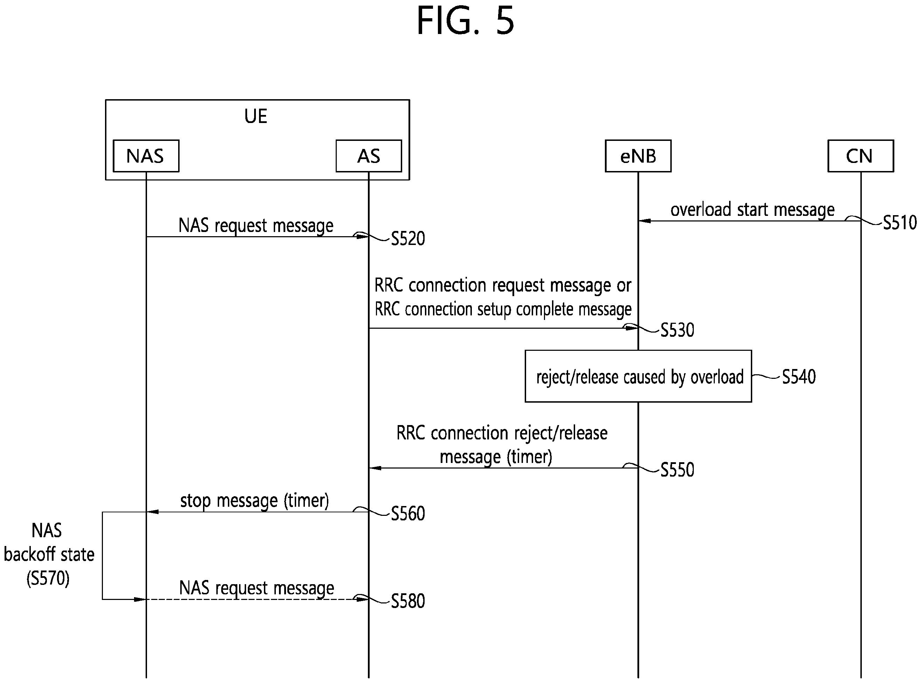

FIG. 5 shows a method of barring access of a UE by a BS.

Referring to FIG. 5, a plurality of UEs simultaneously set up an RRC connection, thereby causing an overload in a mobile communication network. In this case, in step S510, an MME of a core network (CN) may transmit an overload start message to the BS.

Meanwhile, in step S520, the UE may transmit an NAS request message to an AS layer (e.g., RRC layer) of the UE. In addition, in step S530, the AS layer (e.g., RRC layer) of the UE may transmit an RRC connection request message or an RRC connection setup complete message to the BS.

In this case, the BS may control the overload of the CN by rejecting all RRC connection request messages indicating a specific establishment cause or by releasing all RRC connections caused by the specific establishment cause. More specifically, in step S540, the BS may identify the establishment cause included in the received RRC connection request message, and thus may reject a corresponding RRC connection request if it is the specific establishment cause received from the CN. In addition, the BS may release the RRC connection of which an establishment cause is the specific connection cause received from the CN among RRC connections currently established.

Therefore, in step S550, the BS may transmit an RRC connection reject message or an RRC connection release message to the RRC layer of the UE. The RRC connection reject message or the RRC connection release message may include information (i.e., timer) regarding a waiting time for restricting a connection.

In step S560, the AS layer of the UE may transmit a stop message including the timer to the NAS layer of the UE. In step S570, the NAS layer of the UE may transition to a back-off state during the waiting time. Thereafter, if the waiting time elapses, in step S580, the NAS layer of the UE may retransmit the NAS request message to the AS layer of the UE.

An operator providing a communication service may desire to prioritize a specific service over other services. For example, the operator may desire to prioritize a Voice over LTE (VoLTE) call over other mobile originated (MO) data calls. The operator may desire to allow the VoLTE call even during a time when a network is congested due to other data services. Alternatively, the operator may desire to allow the VoLTE call always with a higher priority than other calls. The VoLTE call is an example of a service which the operator desires to prioritize over other services.

According to the conventional mechanism, a specific service can be prioritized over other services after an RRC connection is established for an MO call. In case of LTE, there may be two types of conventional methods for handling a priority. The two types of methods are "ACB with SSAC" introduced in Rel-9 and "ACB with ACB skipping" introduced in Rel-12.

In case of the ACB with SSAC, an SSAC may allow an operator to apply AC barring especially for VoLTE during another call is handled with a normal ACB parameter. For example, the operator may provide a service of VoLTE with a higher priority than other calls by setting SSAC ACB for the VoLTE call to 100% and by setting ACB for other calls to 0%.

In case of the ACB with ACB skipping, similarly to the SSAC, ACB skipping may allow the UE to skip identifying of ACB for a specific service. For example, the operator may provide a service of VoLTE with a higher priority than other calls by setting ACB skip for a VoLTE call to "TRUE" and by setting ACB for other calls to 0%.

Disadvantageously, however, the two types of methods are dependent on system information and require a change in the system information. When the operator desires to apply a policy in a congested environment, the change in the system information may have a great effect on all UEs which are being served by a cell or being camped. Hereinafter, a method of providing a prioritized service and an apparatus supporting the method are described according to an embodiment of the present invention.

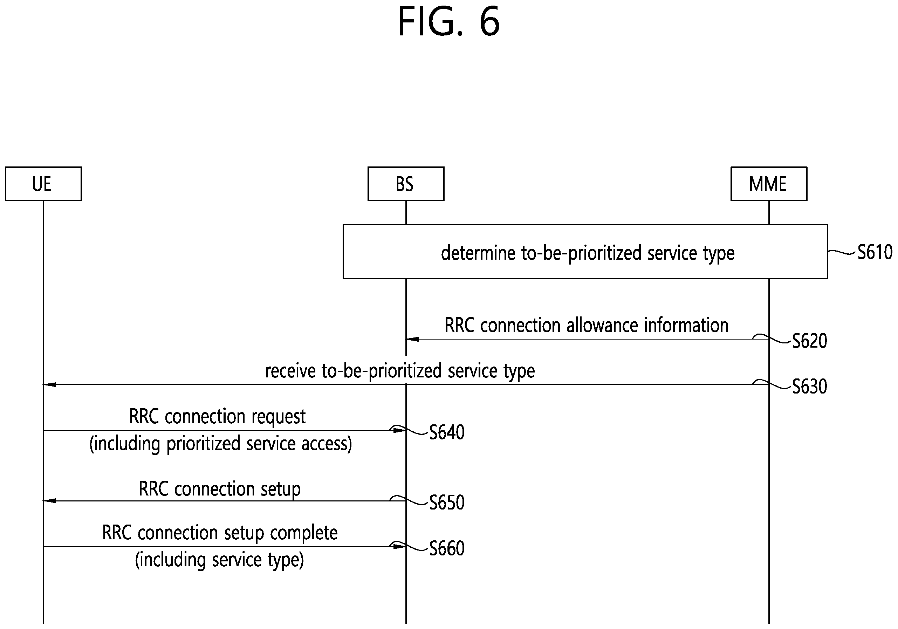

FIG. 6 shows a method of providing a prioritized service according to an embodiment of the present invention.
(1) Referring to FIG. 6, in step S610, a network may determine a to-be-prioritized service type. Alternatively, a BS may determine the to-be-prioritized service type. Alternatively, an MME may determine the to-be-prioritized service type. The to-be-prioritized service type is a type of a service configured to be prioritized over other services. The to-be-prioritized service type may include at least any one of a VoLTE service, a video service, and a short message service (SMS).
(2) In step S620, the MME may transmit RRC connection allowance information to the BS. The RRC connection allowance information may be information indicating whether to allow an RRC connection establishment for a service to be prioritized. The RRC connection allowance information may be transmitted through an overload start message.
(3) In step S630, the UE may receive a prioritized service from a network node. The prioritized service may have the to-be prioritized service type. Alternatively, the prioritized service may be pre-configured in the UE.
Therefore, the UE may know the to-be prioritized service type. The network node may be an MME. When the UE has access to an EPC, the UE may know which service is the prioritized service. Alternatively, when the UE updates a tracking area, the UE may know which service is the prioritized service.
The prioritized service may be fixed. That is, the prioritized service may be predefined. For example, the prioritized service may be at least any one of a VoLTE service, a video service, and an SMS. In this case, a network may indicate a service which needs to be prioritized among predefined prioritized services by using a 1-bit indicator. In this case, a service type may not be signaled to the UE. The 1-bit indicator may be broadcast through RRC signaling. The 1-bit indicator may be broadcast through system information. For example, a bitmap "1, 1, 1" may imply that the VoLTE service, the video service, and the SMS are the prioritized services. For example, a bitmap "1, 0, 0" may imply that the VoLTE service is the prioritized service. For example, a bitmap "1, 0, 1" may imply that the VoLTE service and the SMS are the prioritized services.
(4) In step S640, the UE may transmit to a network an RRC connection request message including prioritized service access information. The prioritized service access information may be information indicating that a service which needs to be prioritized over other services will be accessed. The prioritized service access information may not indicate a type of the service which needs to be prioritized. The prioritized service access information may be included in establishment cause (i.e., EstablishmentCause) of an RRC connection request message.
For example, EstablishmentCause may include emergency, highPriorityAccess, mt-Access, mo-Signalling, mo-Data, delayTolerantAccess-v1020, mo-VoiceCall-v1280, and PrioritizedServiceAccess. By setting the establishment cause of the RRC connection request message to PrioritizedServiceAccess, the UE may inform the network that the service which needs to be prioritized is accessed.
The EstablishmentCause may be set during the UE establishes an RRC connection. The UE may set the establishment cause as prioritized service access information only when the UE broadcasts that the establishment cause (e.g., PrioritizedServiceAccess) is supported explicitly or implicitly.
(5) In step S650, the BS may use the indicated establishment cause to apply an overload action to the RRC connection request message. On the basis of the indicated establishment cause, the BS may transmit an RRC connection setup message or an RRC connection reject message to the UE. The BS may determine which message will be transmitted according to whether the prioritized service access information is included in the RRC connection request message. Specifically, if the prioritized service access information is included in the RRC connection request message, the BS may transmit the RRC connection setup message to the UE. Otherwise, if the prioritized service access information is not included in the RRC connection request message, the BS may transmit the RRC connection reject message to the UE.
For example, if the overload action indicates that the RRC connection establishment is allowed only for a prioritized service, the BS may reject all RRC connection request messages including the establishment cause other than PrioritizedServiceAccess. The BS may reject the RRC connection request message by transmitting the RRC connection reject message to the UE.
For example, in order for the BS to reject all RRC connection request messages including the establishment cause other than PrioritizedServiceAccess, an overload action IE may be set, as shown in Table 1, in an overload response IE included in an overload start message.

**[Table 1]**

| |
|---|
| "reject RRC connection establishments for non-emergency mobile originated data transfer" (i.e., reject traffic corresponding to RRC cause "mo-data" and "delayTolerantAccess" in TS 36.331), or |
| "reject RRC connection establishments for signalling" (i.e., reject traffic corresponding to RRC cause "mo-data", "mo-signalling" and "delayTolerantAccess" in TS 36.331), or |
| "only permit RRC connection establishments for emergency sessions and mobile terminated services" (i.e., only permit traffic corresponding to RRC cause "emergency", "prioritizedServiceAccess" and "mt-Access" in TS 36.331), or |
| "only permit RRC connection establishments for high priority sessions and mobile terminated services" (i.e., only permit traffic corresponding to RRC cause "highPriorityAccess", |
| "prioritizedServiceAccess" and "mt-Access" in TS 36.331), or |
| "reject only RRC connection establishment for delay tolerant access" (i.e., only reject traffic corresponding to RRC cause "delayTolerantAccess" in TS 36.331),or |
| **- "only permit RRC connection establishments for prioritized services" (i.e.. only permit traffic corresponding to RRC cause "prioritizedServiceAccess" in TS 36.331).** |

Referring to Table 1 above, the RRC connection may be established only for the prioritized service. That is, for example, if the overload action IE is set as shown in Table 1, the BS may transmit the RRC connection setup message in response to the RRC connection request message including the prioritized service access information, and the BS may transmit the RRC connection reject message in response to the RRC connection request message not including the prioritized service access information.
In the embodiment of FIG. 6, it is assumed that the RRC connection request message includes the prioritized service access information. Therefore, the BS may transmit the RRC connection setup message to the UE.
Unlike in the embodiment of FIG. 6, if the RRC connection request message does not include the prioritized service access information, the BS may transmit the RRC connection reject message. In this case, the UE may not transmit the RRC connection setup complete message.
(6) In step S660, the UE may transmit to the network the RRC connection setup complete message including a service type transmitted by the UE. That is, in step S640, the UE may indicate that a service which needs to be prioritized is accessed, and in step S660, the UE may indicate a service type of the service which needs to be prioritized. The service type may be a type of a service for triggering the RRC connection to the network. The service type may include at least any one of a VoLTE service, a video service, and an SMS.
- First option: Only after the RRC connection request message including the prioritized service access information is transmitted, the UE may indicate the service type in the RRC connection setup complete message. The service type may be indicated only during the prioritized service.
- Second option: Irrespective of whether the prioritized service access information exists in the RRC connection request message, the UE may indicate the service type in the RRC connection setup complete message. The service type may be indicated during the prioritized service. Alternatively, the service type may be indicated during a non-prioritized service. The UE may indicate the service type only when a cell on which the UE is camping broadcasts that the service type is supported explicitly or implicitly.

According to the embodiment of FIG. 6, the UE may inform the BS that there is a service which needs to be prioritized, through the RRC connection request message. Thereafter, the UE may inform the BS of a type of the service which needs to be prioritized, through the RRC connection setup complete message. At present, there is a limitation in information which can be included in the establishment cause of the RRC connection request message. Therefore, an operator may variously set a prioritized service by informing that there is only a prioritized service access by using the establishment cause and thereafter by informing a type of the prioritized service by using the RRC connection setup complete message. Further, although the conventional ACB with SSAC and ACB with ACB skipping are dependent on a system information block since a start of an RRC connection procedure is controlled to prioritize a specific service, the present invention may not be dependent on the system information block to prioritize the specific service since a congestion is controlled during the RRC connection procedure or after the RRC connection establishment is complete.

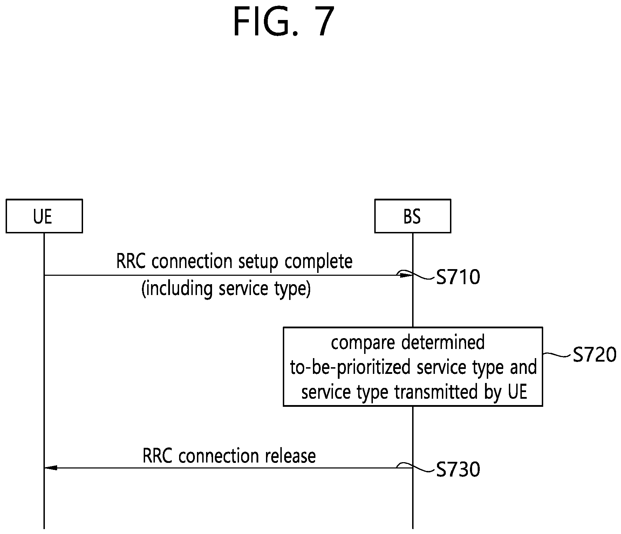

FIG. 7 shows a method of determining whether a BS will receive a prioritized service according to an embodiment of the present invention.
(1) Referring to FIG. 7, in step S710, a UE may transmit to a network an RRC connection setup complete message including a service type transmitted by the UE. The service type may be a type of a service which needs to be prioritized. For example, the service type may include at least any one of a VoLTE service, a video service, and an SMS.
(2) In step S720, the BS may compare the to-be-prioritized service type determined by the network and the service type transmitted by the UE. The to-be-prioritized service type determined by the network is described in step S610 of FIG. 6.
(3) In step S730, if a type of a service which the network desires to prioritize does not coincide with a type of a service which the UE desires to prioritize, the BS may transmit an RRC connection release message to the UE. If the type of the service which the network desires to prioritize coincides with the type of the service which the UE desires to prioritize, the service may be prioritized over other services.

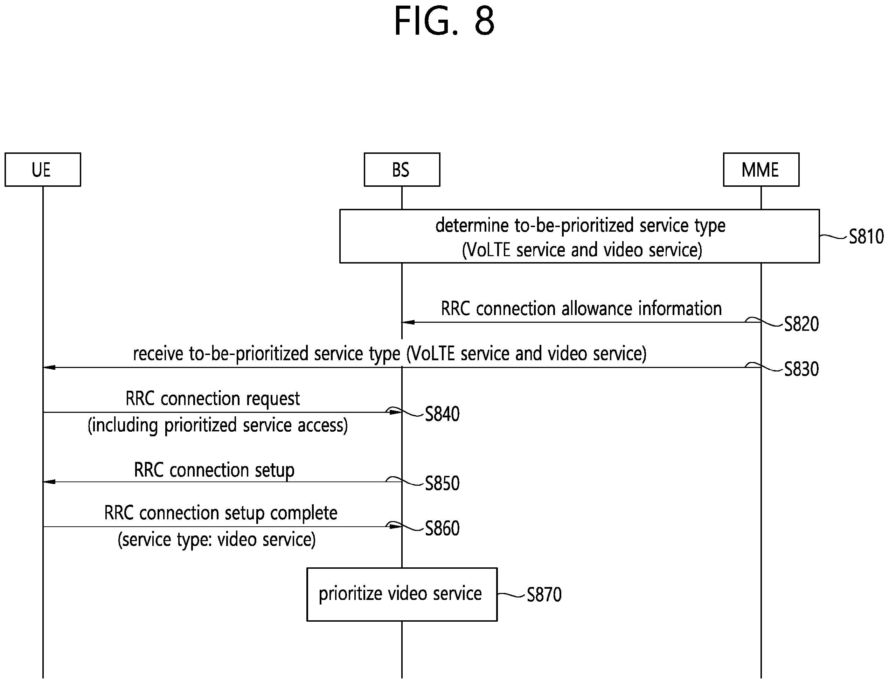

FIG. 8 shows an example of a method of providing a prioritized service according to an embodiment of the present invention.
(1) Referring to FIG. 8, in step S810, a network may determine a to-be-prioritized service type. In the embodiment of FIG. 8, it is assumed that the determined to-be-prioritized service type is a VoLTE service and a video service. That is, it is assumed that an operator desires to prioritize the VoLTE service and the video service over other services.
(2) In step S820, an MME may transmit RRC connection allowance information to a BS. The RRC connection allowance information may indicate that an RRC connection establishment for the service to be prioritized is allowed.
(3) In step S830, a UE may receive the to-be-prioritized service type from the MME. The to-be-prioritized service type is the VoLTE service and the video type. Therefore, the UE may know that a type of a service which an operator desires to prioritize is the VoLTE service or the video service. If the to-be-prioritized service type is fixed, the UE may know the type of the service which the operator desires to prioritize, by receiving a set of 1-bit indicators. For example, if the to-be-prioritized service type is fixed to "VoLTE service, video service, SMS", the set of 1-bit indicators may be "1, 1, 0".
(4) In step S840, the UE may transmit to a network an RRC connection request message including prioritized service access information.
(5) In step S850, upon receiving the prioritized service access information, the BS may transmit an RRC connection setup message to the UE.
(6) In step S860, the UE may transmit to the network an RRC connection setup complete message including the service type transmitted by the UE. It is assumed in the embodiment of FIG. 8 that the service type transmitted by the UE includes a video service.
(7) In step S870, the BS may compare the to-be-prioritized service type determined by the network and the service type transmitted by the UE. In the embodiment of FIG. 8, since the to-be-prioritized service type determined by the network is the VoLTE service and the video service and the service type transmitted by the UE is the video service, the video service may be prioritized over other services.

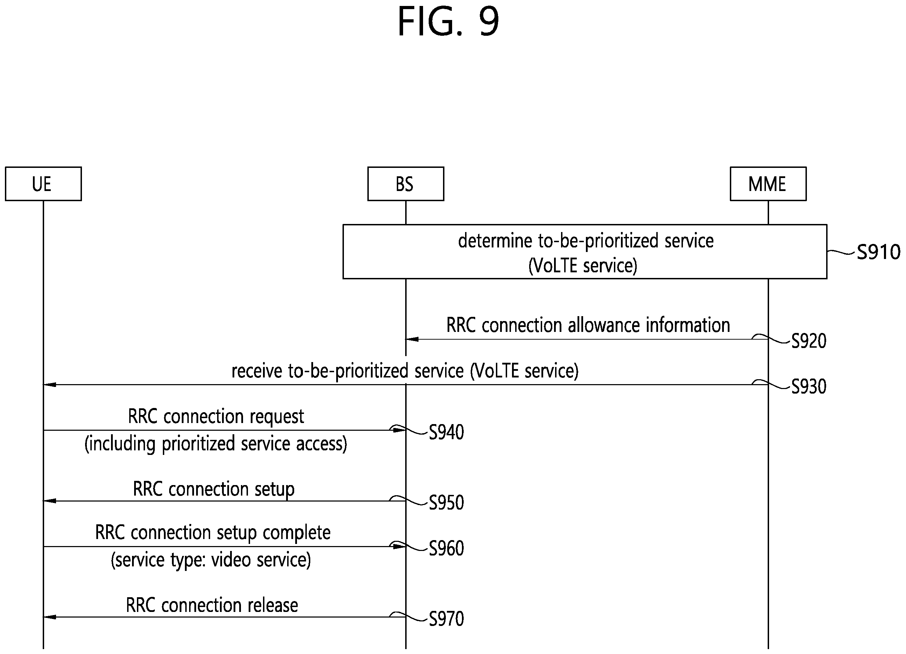

FIG. 9 shows an example of a method of providing a prioritized service according to an embodiment of the present invention.
(1) Referring to FIG. 9, in step S910, a network may determine a to-be-prioritized service type. In the embodiment of FIG. 9, it is assumed that the determined to-be-prioritized service type is a VoLTE service. That is, it is assumed that an operator desires to prioritize the VoLTE service over other services.
(2) In step S920, an MME may transmit RRC connection allowance information to a BS. The RRC connection allowance information may indicate that an RRC connection establishment for the service to be prioritized is allowed.
(3) In step S930, a UE may receive the to-be-prioritized service type from the MME. The to-be-prioritized service type is the VoLTE service. Therefore, the UE may know that a type of a service which an operator desires to prioritize is the VoLTE service. If the to-be-prioritized service type is fixed, the UE may know the type of the service which the operator desires to prioritize, by receiving a set of 1-bit indicators. For example, if the to-be-prioritized service type is fixed to "video service, VoLTE service, SMS", the set of 1-bit indicators may be "0, 1, 0".
(4) In step S940, the UE may transmit to a network an RRC connection request message including prioritized service access information.
(5) In step S950, upon receiving the prioritized service access information, the BS may transmit an RRC connection setup message to the UE.
(6) In step S960, the UE may transmit to the network an RRC connection setup complete message including the service type transmitted by the UE. It is assumed in the embodiment of FIG. 9 that the service type transmitted by the UE includes the video service.
(7) In step S970, the BS may compare the to-be-prioritized service type determined by the network and the service type transmitted by the UE. In the embodiment of FIG. 9, since the to-be-prioritized service type determined by the network is the VoLTE service and the service type transmitted by the UE is the video service, the video service is not necessarily prioritized. Therefore, the BS may transmit an RRC connection release message to the UE. In addition, an RRC connection may be released.

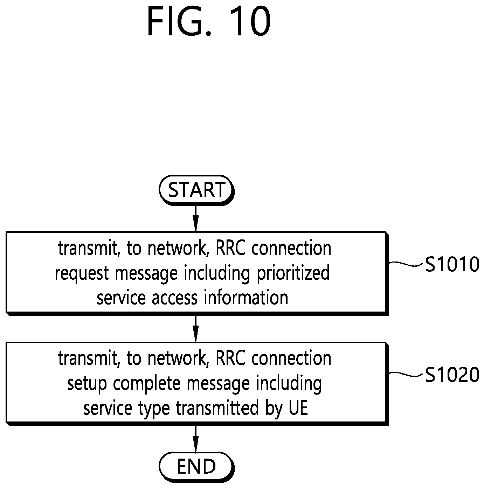

FIG. 10 is a block diagram showing a method of transmitting a prioritized service by a UE according to an embodiment of the present invention.

Referring to FIG. 10, in step S1010, the UE may transmit to a network an RRC connection request message including prioritized service access information. The prioritized service access information is information indicating that a service to be prioritized higher than services is accessed. The prioritized service access information may be included in EstablishmentCause. The prioritized service access information is transmitted to the network in response to the type of the service to be prioritized higher than other services.

In step S1020, an RRC connection setup complete message including a service type transmitted by the UE may be transmitted to the network.

The UE may receive from the network the to-be-prioritized service type determined by the network. The to-be-prioritized service type may include at least any one of a voice over LTE (VoLTE) service, a video service, and a short message service (SMS). If the to-be-prioritized service type is predefined, the to-be-prioritized service type may be indicated by the network by using a bitmap.

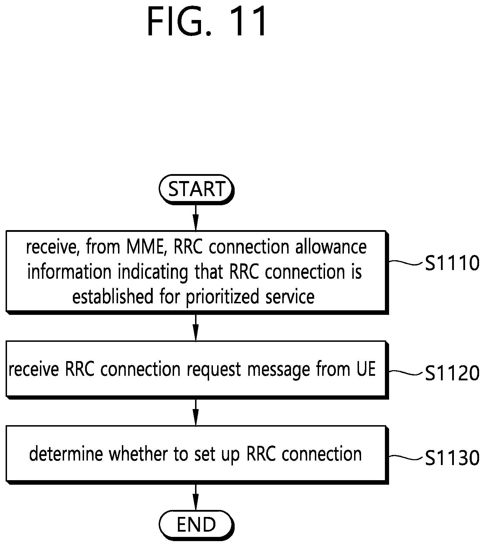

FIG. 11 is a block diagram showing a method of receiving a prioritized service by a BS according to an embodiment of the present invention.

Referring to FIG. 11, in step S1110, a BS may receive, from a mobility management entity (MME), RRC connection allowance information indicating that an RRC connection establishment for a service to be prioritized. The RRC connection allowance information may indicate that only the RRC connection establishment is allowed for the service to be prioritized. The RRC connection allowance information may be received through an overload start message.

In step S1120, the BS may receive an RRC connection request message from a UE.

In step S1130, the BS may determine whether to set up an RRC connection.

If the RRC connection request message includes prioritized service access information, the BS may determine to set up the RRC connection, and the BS may transmit to the UE an RRC connection setup message. The prioritized service access information may be information indicating that the service to be prioritized higher than other services is accessed. The prioritized service access information may be included in EstablishmentCause. The BS may receive from the UE an RRC connection setup complete message including a service type transmitted by the UE. The RRC connection setup complete message may be received in response to the RRC connection setup message. If a service type transmitted by the UE is different from a to-be-prioritized service type determined by a network, the BS may transmit an RRC connection release message to the UE.

If the RRC connection request message does not include prioritized service access information, the BS may determine not to set up the RRC connection, and may transmit an RRC connection reject message to the UE. The prioritized service access information may be information indicating that a service to be prioritized higher than other services is accessed.

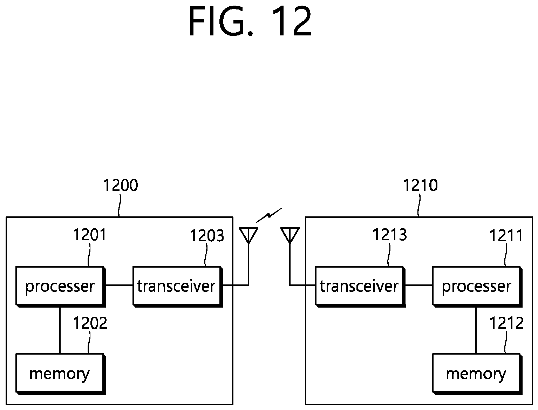

FIG. 12 is a block diagram illustrating a wireless communication system according to the embodiment of the present invention.

A BS 1200 includes a processor 1201, a memory 1202 and a transceiver 1203. The memory 1202 is connected to the processor 1201, and stores various information for driving the processor 1201. The transceiver 1203 is connected to the processor 1201, and transmits and/or receives radio signals. The processor 1201 implements proposed functions, processes and/or methods. In the above embodiment, an operation of the base station may be implemented by the processor 1201.

A UE 1210 includes a processor 1211, a memory 1212 and a transceiver 1213. The memory 1212 is connected to the processor 1211, and stores various information for driving the processor 1211. The transceiver 1213 is connected to the processor 1211, and transmits and/or receives radio signals. The processor 1211 implements proposed functions, processes and/or methods. In the above embodiment, an operation of the UE may be implemented by the processor 1211.

The processor may include an application-specific integrated circuit (ASIC), a separate chipset, a logic circuit, and/or a data processing unit. The memory may include a read-only memory (ROM), a random access memory (RAM), a flash memory, a memory card, a storage medium, and/or other equivalent storage devices. The transceiver may include a base-band circuit for processing a wireless signal. When the embodiment is implemented in software, the aforementioned methods can be implemented with a module (i.e., process, function, etc.) for performing the aforementioned functions. The module may be stored in the memory and may be performed by the processor. The memory may be located inside or outside the processor, and may be coupled to the processor by using various well-known means.

Various methods based on the present specification have been described by referring to drawings and reference numerals given in the drawings on the basis of the aforementioned examples. Although each method describes multiple steps or blocks in a specific order for convenience of explanation, the invention disclosed in the claims is not limited to the order of the steps or blocks, and each step or block can be implemented in a different order, or can be performed simultaneously with other steps or blocks. In addition, those ordinarily skilled in the art can know that the invention is not limited to each of the steps or blocks, and at least one different step can be added or deleted without departing from the scope of the following claims.

The aforementioned embodiment includes various examples. It should be noted that those ordinarily skilled in the art know that all possible combinations of examples cannot be explained, and also know that various combinations can be derived from the technique of the present specification. Therefore, the protection scope of the invention should be determined by combining various examples described in the detailed explanation, without departing from the scope of the following claims.

## Claims

1. A method performed by a user equipment, UE, (1210) in a wireless communication system, the method comprising:
receiving, from a network, a prioritized service list including at least one of service types;
transmitting, to the network, a radio resource control, RRC, connection request message including an establishment cause which includes prioritized service access information, when a service type of the specific service is included in the prioritized service list, wherein the prioritized service access information informs that a specific service that will be accessed is prioritized;
receiving, from the network, a RRC connection setup message in response to the establishment cause; and
transmitting, to the network, a RRC connection setup complete message including information informing the service type of the specific service.

2. The method of claim 1, further comprising:
receiving, from the network, by the UE (1210), a to-be-prioritized service type determined by the network.

3. The method of claim 2, wherein the to-be-prioritized service type includes at least one of a voice over LTE, VoLTE, service, a video service, or a short message service, SMS.

4. The method of claim 2, wherein if the to-be-prioritized service type is predefined, the to-be-prioritized service type is indicated by the network by using a bitmap.

5. The method of claim 1, wherein the prioritized service access information is included in EstablishmentCause.

6. The method of claim 2, wherein the prioritized service access information is transmitted to the network in response to the type of the service to be prioritized higher than other services.

7. A method performed by a base station in a wireless communication system, the method comprising:
receiving, from a user equipment, UE (1210), a radio resource control, RRC, connection request message including an establishment cause which includes prioritized service access information, wherein the prioritized service access information informs that a specific service that will be accessed is prioritized;
transmitting, to the UE (1210), a RRC connection setup message; and
receiving, from the UE (1210), a RRC connection setup complete message including information informing a service type of the specific service.

8. A user equipment, UE (1210), in a wireless communication system, the UE (1210) comprising:
a memory (1212); a transceiver (1213); and a processor (1211) coupling the memory (1212) and the transceiver (1213), wherein the processor (1211) is configured to:
control the transceiver (1213) to receive, from a network, a prioritized service list including at least one of service types;
control the transceiver (1213) to transmit, to the network, a radio access control, RRC, connection request message including an establishment cause which includes prioritized service access information, when a service type of the specific service is included in the prioritized service list, wherein the prioritized service access information informs that a specific service that will be accessed is prioritized;
control the transceiver (1213) to receive, from the network, a RRC connection setup message in response to the establishment cause; and
control the transceiver (1213) to transmit, to the network, a RRC connection setup complete message including information informing the service type of the specific service.

9. The UE (1210) of claim 8, wherein the processor (1211) is further configured to control the transceiver (1213) to receive, from the network, a to-be-prioritized service type determined by the network.

10. The UE (1210) of claim 9, wherein the to-be-prioritized service type includes at least one of a voice over LTE, VoLTE, service, a video service, or a short message service, SMS.

11. The UE (1210) of claim 9, wherein if the to-be-prioritized service type is predefined, the to-be-prioritized service type is indicated by the network by using a bitmap.

12. The UE (1210) of claim 8, wherein the prioritized service access information is included in EstablishmentCause.

13. The UE (1210) of claim 9, wherein the prioritized service access information is transmitted to the network in response to the type of the service to be prioritized higher than other services.

14. A base station, BS (1200), in a wireless communication system, the BS (1200) comprising:
a memory (1202); a transceiver (1203); and a processor (1201) coupling the memory (1202) and the transceiver (1203), wherein the processor (1201) is configured to:
control the transceiver (1203) to receive, from a user equipment, UE (1210), a radio resource control, RRC, connection request message including an establishment cause which includes prioritized service access information, wherein the prioritized service access information informs that a specific service that will be accessed is prioritized;
control the transceiver (1203) to transmit, to the UE (1210), a RRC connection setup message; and
control the transceiver (1203) to receive, from the UE (1210), a RRC connection setup complete message including information informing a service type of the specific service.

## Patentansprüche

1. Verfahren, das von einem Benutzergerät, UE, (1210) in einem drahtlosen Kommunikationssystem durchgeführt wird, wobei das Verfahren aufweist:
Empfangen einer Liste priorisierter Dienste, die wenigstens einen Diensttyp umfasst, von einem Netzwerk;
Übertragen einer Funkressourcensteuerungs-, RRC-, Verbindungsanforderungsnachricht, die einen Einrichtungsgrund umfasst, der Zugriffsinformationen über priorisierte Dienste umfasst, an das Netzwerk, wenn ein Diensttyp des spezifischen Dienstes in der Liste priorisierter Dienste enthalten ist, wobei die Zugriffsinformationen über priorisierte Dienste darüber informieren, dass ein spezifischer Dienst, auf den zugegriffen wird, priorisiert wird;
ansprechend auf den Einrichtungsgrund Empfangen einer RRC-Verbindungsaufbaunachricht von dem Netzwerk; und
Übertragen einer RRC-Verbindungsaufbauabschlussnachricht, die Informationen umfasst, die über den Diensttyp des spezifischen Dienstes informieren, an das Netzwerk.

2. Verfahren nach Anspruch 1, das ferner aufweist:
Empfangen eines durch das Netzwerk bestimmten zu priorisierenden Diensttyps von dem Netzwerk durch das UE (1210).

3. Verfahren nach Anspruch 2, wobei der zu priorisierende Diensttyp einen Sprache-über-LTE-, VoLTE-, Dienst und/oder einen Videodienst und/oder einen Kurznachrichtendient, SMS, umfasst.

4. Verfahren nach Anspruch 2, wobei der zu priorisierende Diensttyp unter Verwendung einer Bitmap durch das Netzwerk angezeigt wird, wenn der zu priorisierende Diensttyp vordefiniert ist.

5. Verfahren nach Anspruch 1, wobei die Zugriffsinformationen über priorisierte Dienste in dem Einrichtungsgrund enthalten sind.

6. Verfahren nach Anspruch 2, wobei die Zugriffsinformationen über priorisierte Dienste ansprechend darauf, dass Diensttyp höher als andere Dienste priorisiert werden soll, an das Netzwerk übertragen wird.

7. Verfahren, das von einer Basisstation in einem drahtlosen Kommunikationssystem durchgeführt wird, wobei das Verfahren aufweist:
Empfangen einer Funkressourcensteuerungs-, RRC-, Verbindungsanforderungsnachricht, die einen Einrichtungsgrund umfasst, der Zugriffsinformationen über priorisierte Dienste umfasst, von einem Benutzergerät, UE, (1210), wobei die Zugriffsinformationen über priorisierte Dienste darüber informieren, dass ein spezifischer Dienst, auf den zugegriffen wird, priorisiert wird;
Übertragen einer RRC-Verbindungsaufbaunachricht an das UE (1210); und
Empfangen einer RRC-Verbindungsaufbauabschlussnachricht, die Informationen umfasst, die über den Diensttyp des spezifischen Dienstes informieren, von dem UE (1210).

8. Benutzergerät, UE, (1210) in einem drahtlosen Kommunikationssystem, wobei das UE (1210) aufweist:
einen Speicher (1212); einen Transceiver (1213); und einen Prozessor (1211), der den Speicher (1212) und den Transceiver (1213) koppelt, wobei der Prozessor (1211) konfiguriert ist, um:
den Transceiver (1213) zu steuern, um eine Liste priorisierter Dienste, die wenigstens einen Diensttyp umfasst, von einem Netzwerk zu empfangen;
den Transceiver (1213) zu steuern, um eine Funkressourcensteuerungs-, RRC-, Verbindungsanforderungsnachricht, die einen Einrichtungsgrund umfasst, der Zugriffsinformationen über priorisierte Dienste umfasst, an das Netzwerk zu übertragen, wenn ein Diensttyp des spezifischen Dienstes in der Liste priorisierter Dienste enthalten ist, wobei die Zugriffsinformationen über priorisierte Dienste darüber informieren, dass ein spezifischer Dienst, auf den zugegriffen wird, priorisiert wird;
den Transceiver (1213) zu steuern, um ansprechend auf den Einrichtungsgrund eine RRC-Verbindungsaufbaunachricht von dem Netzwerk zu empfangen; und
den Transceiver (1213) zu steuern, um eine RRC-Verbindungsaufbauabschlussnachricht, die Informationen umfasst, die über den Diensttyp des spezifischen Dienstes informieren, an das Netzwerk zu übertragen.

9. UE (1210) nach Anspruch 8, wobei der Prozessor (1211) ferner konfiguriert ist, um den Transceiver (1213) zu steuern, um einen durch das Netzwerk bestimmten zu priorisierenden Diensttyp von dem Netzwerk zu empfangen.

10. UE (1210) nach Anspruch 9, wobei der zu priorisierende Diensttyp einen Sprache-über-LTE-, VoLTE-, Dienst und/oder einen Videodienst und/oder einen Kurznachrichtendient, SMS, umfasst.

11. UE (1210) nach Anspruch 9, wobei der zu priorisierende Diensttyp unter Verwendung einer Bitmap durch das Netzwerk angezeigt wird, wenn der zu priorisierende Diensttyp vordefiniert ist.

12. UE (1210) nach Anspruch 8, wobei die Zugriffsinformationen über priorisierte Dienste in dem Einrichtungsgrund enthalten sind.

13. UE (1210) nach Anspruch 9, wobei die Zugriffsinformationen über priorisierte Dienste ansprechend darauf, dass Diensttyp höher als andere Dienste priorisiert werden soll, an das Netzwerk übertragen wird.

14. Basisstation, BS, (1210) in einem drahtlosen Kommunikationssystem, wobei die BS (1200) aufweist:
einen Speicher (1202); einen Transceiver (1203); und einen Prozessor (1201), der den Speicher (1202) und den Transceiver (1203) koppelt, wobei der Prozessor (1201) konfiguriert ist, um:
den Transceiver (1203) zu steuern, um eine Funkressourcensteuerungs-, RRC-, Verbindungsanforderungsnachricht, die einen Einrichtungsgrund umfasst, der Zugriffsinformationen über priorisierte Dienste umfasst, von einem Benutzergerät, UE, (1210) zu empfangen, wobei die Zugriffsinformationen über priorisierte Dienste darüber informieren, dass ein spezifischer Dienst, auf den zugegriffen wird, priorisiert wird;
den Transceiver (1203) zu steuern, um eine RRC-Verbindungsaufbaunachricht an das UE (1210) zu übertragen; und
den Transceiver (1203) zu steuern, um eine RRC-Verbindungsaufbauabschlussnachricht, die Informationen umfasst, die über einen Diensttyp des spezifischen Dienstes informieren, von dem UE (1210) zu empfangen.

## Revendications

1. Procédé réalisé par un équipement utilisateur, UE, (1210) dans un système de communication sans fil, le procédé comprenant :
la réception, en provenance d'un réseau, d'une liste de services classés par ordre de priorité incluant au moins un parmi des types de service ;
l'émission, au réseau, d'un message de demande de connexion de contrôle de ressources radio, RRC, incluant une cause d'établissement qui inclut des informations de priorités d'accès à des services, lorsqu'un type de service du service spécifique est inclus dans la liste de services classés par ordre de priorité, dans lequel les informations de priorités d'accès à des services informent qu'un service spécifique auquel l'accès sera obtenu est prioritaire ;
la réception, en provenance du réseau, d'un message d'établissement de connexion de RRC en réponse à la cause d'établissement ; et
l'émission, au réseau, d'un message d'établissement de connexion de RRC terminée incluant des informations indiquant le type de service du service spécifique.

2. Procédé selon la revendication 1, comprenant en outre :
la réception, en provenance du réseau, par l'UE (1210), d'un type de service, auquel la priorité doit être donnée, déterminé par le réseau.

3. Procédé selon la revendication 2, dans lequel le type de service auquel la priorité doit être donnée inclut au moins un d'un service de voix sur LTE, VoLTE, d'un service vidéo, ou d'un service de minimessage, SMS.

4. Procédé selon la revendication 2, dans lequel, si le type de service, auquel la priorité doit être donnée, est prédéfini, le type de service auquel la priorité doit être donnée est indiqué par le réseau en utilisant une bitmap.

5. Procédé selon la revendication 1, dans lequel les informations de priorités d'accès à des services sont incluses dans EstablishmentCause.

6. Procédé selon la revendication 2, dans lequel les informations de priorités d'accès à des services sont émises au réseau en réponse au type du service auquel la priorité plus élevée que celles d'autres services doit être donnée.

7. Procédé mis en oeuvre par une station de base dans un système de communication sans fil, le procédé comprenant :
la réception, en provenance d'un équipement utilisateur, UE, (1210), d'un message de demande de connexion de contrôle de ressources radio, RRC, incluant une cause d'établissement qui inclut des informations de priorités d'accès à des services, dans lequel les informations de priorités d'accès à des services informent qu'un service spécifique auquel l'accès sera obtenu est prioritaire ;
l'émission, à l'UE (1210), d'un message d'établissement de connexion de RRC ; et
la réception, en provenance de l'UE (1210), d'un message d'établissement de connexion de RRC terminée incluant des informations indiquant un type de service du service spécifique.

8. Équipement utilisateur, UE (1210), dans un système de communication sans fil, l'UE (1210) comprenant :
une mémoire (1212) ; un émetteur-récepteur (1213) ; et un processeur (1211) couplant la mémoire (1212) et l'émetteur-récepteur (1213), dans lequel le processeur (1211) est configuré pour :
contrôler l'émetteur-récepteur (1213) pour recevoir, en provenance d'un réseau, une liste de services classés par ordre de priorité incluant au moins un parmi des types de service ;
contrôler l'émetteur-récepteur (1213) pour émettre, au réseau, un message de demande de connexion de contrôle d'accès radio, RRC, incluant une cause d'établissement qui inclut des informations de priorités d'accès à des services, lorsqu'un type de service du service spécifique est inclus dans la liste de services classés par ordre de priorité, dans lequel les informations de priorités d'accès à des services informent qu'un service spécifique, auquel l'accès sera obtenu, est prioritaire ;
contrôler l'émetteur-récepteur (1213) pour recevoir, en provenance du réseau, un message d'établissement de connexion de RRC en réponse à la cause d'établissement ; et
contrôler l'émetteur-récepteur (1213) pour émettre, au réseau, un message d'établissement de connexion de RRC terminée incluant des informations indiquant le type de service du service spécifique.

9. UE (1210) selon la revendication 8, dans lequel le processeur (1211) est en outre configuré pour contrôler l'émetteur-récepteur (1213) pour recevoir, en provenance du réseau, un type de service, auquel la priorité doit être donnée, déterminé par le réseau.

10. UE (1210) selon la revendication 9, dans lequel le type de service auquel la priorité doit être donnée inclut au moins un d'un service de voix sur LTE, VoLTE, d'un service vidéo, ou d'un service de minimessage, SMS.

11. UE (1210) selon la revendication 9, dans lequel, si le type de service, auquel la priorité doit être donnée, est prédéfini, le type de service auquel la priorité doit être donnée est indiqué par le réseau en utilisant un topogramme binaire.

12. UE (1210) selon la revendication 8, dans lequel les informations de priorités d'accès à services sont incluses dans EstablishmentCause.

13. UE (1210) selon la revendication 9, dans lequel les informations de priorités d'accès à services sont émises au réseau en réponse au type du service auquel la priorité plus élevée que celles d'autres services doit être donnée.

14. Station de base, BS (1200), dans un système de communication sans fil, la BS (1200) comprenant :
une mémoire (1202) ; un émetteur-récepteur (1203) ; et un processeur (1201) couplant la mémoire (1202) et le émetteur-récepteur (1203), dans laquelle le processeur (1201) est configuré pour :
contrôler l'émetteur-récepteur (1203) pour recevoir, en provenance d'un équipement utilisateur, UE (1210), un message de demande de connexion de contrôle de ressources radio, RRC, incluant une cause d'établissement qui inclut des informations de priorités d'accès à services, dans laquelle les informations de priorités d'accès à services informent qu'un service spécifique auquel l'accès sera obtenu est prioritaire ;
contrôler l'émetteur-récepteur (1203) pour émettre, vers l'UE (1210), un message d'établissement de connexion de RRC ; et
contrôler l'émetteur-récepteur (1203) pour recevoir, en provenance de l'UE (1210), un message d'établissement de connexion de RRC terminée incluant des informations indiquant un type de service du service spécifique.
